# EUROPÄISCHE PATENTANMELDUNG

(11) **EP 3 560 585 A1**
(43) Veröffentlichungstag der Anmeldung: **30.10.2019**
(21) Anmeldenummer: 18178634.4
(22) Anmeldetag: 19.06.2018
(51) Int. Cl.: B01J 3/00, C02F 1/72, C02F 11/08, C02F 103/18

(54) **VERFAHREN UND ANLAGE ZUR BEHANDLUNG EINER ABLAUGE EINER LAUGEWÄSCHE**

(30) Priorität: 27.04.2018 DE 102018110299
(71) Anmelder: Linde Aktiengesellschaft, 80331 München (DE)
(72) Erfinder: Wellenhofer, Anton, 82069 Hohenschäftlarn (DE); Zander, Jörg, 81479 München (DE); Ananieva, Ekaterina, 81639 München (DE); Hairer, Florian, 80801 München (DE); Rothe, Michael, 80331 München (DE); Schubert, Martin, 81375 München (DE)
(74) Vertreter: Frommberger, Moritz

(57) **Zusammenfassung**

Die Erfindung betrifft ein Verfahren zur Behandlung einer Ablauge einer Laugewäsche, bei dem die Ablauge mit Sauerstoff oder einem sauerstoffhaltige Gasgemisch und Dampf einer Oxidationseinheit (1) zugeführt und in dieser für einen Reaktionszeitraum auf einem ersten Temperaturniveau und einem ersten Druckniveau einer Nassoxidation unterworfen wird, wobei der Oxidationseinheit (1) ein dreiphasiges Komponentengemisch, das eine Gasphase, eine Flüssigphase und Feststoffpartikel umfasst, entnommen und einer Abkühlung und Phasentrennung unterworfen wird. Es ist vorgesehen, ass das dreiphasige Komponentengemisch in unveränderter Zusammensetzung zunächst von dem ersten Druckniveau auf ein zweites Druckniveau entspannt und hierdurch auf ein zweites Temperaturniveau abgekühlt wird, und dass das auf das zweite Druckniveau entspannte und auf das zweite Temperaturniveau abgekühlte dreiphasige Komponentengemisch anschließend zumindest zum Teil einer weiteren Abkühlung auf ein drittes Temperaturniveau und danach einer Phasentrennung unterworfen wird. Eine entsprechende Anlage ist ebenfalls Gegenstand der vorliegenden Erfindung.

## Beschreibung

Die Erfindung betrifft ein Verfahren zur Behandlung einer Ablauge einer Laugewäsche unter Verwendung eines Oxidationsreaktors und eine entsprechende Anlage gemäß den jeweiligen Oberbegriffen der unabhängigen Patentansprüche.

### Stand der Technik

Olefine wie Ethylen oder Propylen, aber auch Diolefine wie Butadien sowie Aromaten können durch Dampfspalten (engl. Steam Cracking) aus Paraffinen hergestellt werden. Entsprechende Verfahren sind seit langem bekannt. Zu Details sei auf Fachliteratur wie den Artikel "Ethylene" in Ullmann's Encyclopedia of Industrial Chemistry, Onlineausgabe, 15. April 2007, DOI 10.1002/14356007.a10_045.pub2, verwiesen.

Beim Dampfspalten wird ein sogenanntes Spaltgas (engl. Cracked Gas) erhalten, das neben den Zielprodukten nicht umgesetzte Kohlenwasserstoffe und unerwünschte Nebenprodukte enthält. Dieses Spaltgas wird in bekannten Verfahren zunächst einer Aufbereitung unterworfen, bevor es einer Fraktionierung zur Gewinnung unterschiedlicher Kohlenwasserstoffe bzw. Kohlenwasserstofffraktionen zugeführt wird. Details sind in dem zitierten Artikel insbesondere in Abschnitt 5.3.2.1, "Front-End Section" und 5.3.2.2., "Hydrocarbon Fractionation Section", beschrieben.

Eine entsprechende Aufbereitung umfasst insbesondere eine sogenannte Sauergasentfernung, bei der Komponenten wie Kohlendioxid, Schwefelwasserstoff und Mercaptane aus dem Spaltgas abgetrennt werden. Das Spaltgas wird typischerweise vor und nach einer entsprechenden Behandlung verdichtet. Beispielsweise kann das Spaltgas einem sogenannten Rohgasverdichter auf einem Zwischendruckniveau entnommen, der Sauergasentfernung unterworfen, und anschließend in dem Rohgasverdichter weiter verdichtet werden.

Die Sauergasentfernung kann insbesondere eine sogenannte Laugewäsche unter Verwendung von Natronlauge umfassen. Insbesondere bei hohen Konzentrationen an Schwefelverbindungen kann die Laugewäsche auch mit einer Aminwäsche, beispielsweise unter Verwendung von Ethanolamin, kombiniert werden. Die in der Laugewäsche erhaltene Ablauge, die Sulfid und Carbonat in einem Gehalt von einigen Prozent aufweist, wird typischerweise in einer Ablaugebehandlung oxidiert und ggf. neutralisiert, bevor sie einer biologischen Abwasserbehandlung unterworfen werden kann. Die Oxidation dient zur Entfernung toxischer Komponenten und zur Reduzierung des biologischen Sauerstoffbedarfs. Die Ablaugeoxidation wird typischerweise in Form einer chemischen Nassoxidation des Sulfids mit Sauerstoff in Lösung durchgeführt.

Aus dem Stand der Technik sind mehrere unterschiedliche Verfahren zur Nassoxidation von verbrauchten Ablaugen bekannt. Beispielsweise sei auf den Artikel von C.B. Maugans und C. Alice, "Wet Air Oxidation: A Review of Commercial Subcritical Hydrothermal Treatment", IT3'02 Conference, 13. bis 17. Mai 2002, New Orleans, Louisiana, oder die US 5,082,571 A verwiesen.

Die verbrauchte Ablauge kann in derartigen Verfahren auf den gewünschten Reaktionsdruck gebracht und im Gegenstrom mit der oxidierten Ablauge angewärmt werden. Die erwärmte verbrauchte Ablauge kann anschließend unter Zufuhr von Sauerstoff in einen Oxidationsreaktor geführt und oxidiert werden. Der zur Reaktion benötigte Sauerstoff wird dabei entweder in Form von Luft oder als reiner Sauerstoff zugefügt. Eine zusätzliche, in anderen Verfahrensvarianten auch die ausschließliche, Anwärmung der verbrauchten Ablauge kann durch Einleitung von heißem Dampf in den Oxidationsreaktor vorgenommen werden.

Nach einer typischen Verweildauer von ca. einer Stunde (abhängig von der gewählten Temperatur und dem gewählten Druck) wird die oxidierte Ablauge mit dem zugehörigen Abgas über einen Wärmetauscher unter Erwärmung der verbrauchten Ablauge abgekühlt. Nach einer Druckkontrolle wird in einem anschließenden Abscheidebehälter das Abgas von der Flüssigkeit getrennt. Die flüssige oxidierte Ablauge kann danach unter optionaler Einstellung des pH-Werts (Neutralisation) in ein Verfahren zur biologischen Abwasseraufbereitung geführt werden.

Weitere Verfahren und Verfahrensvarianten sind aus der DE 10 2006 030 855 A1, der US 4,350,599 A und dem Artikel von C.E. Ellis, "Wet Air Oxidation of Refinery Spent Caustic", Environmental Progress, Band 17, Nr.1, 1998, Seiten 28-30 beschrieben.

Die Oxidation der schwefelhaltigen Verbindungen in der verbrauchten Ablauge erfolgt normalerweise in zwei unterschiedlichen Schritten. Bei der Oxidation von Sulfiden entstehen parallel Sulfit, Sulfat und Thiosulfat. Während Sulfit sehr schnell zu Sulfat weiteroxidiert wird, ist die Weiterreaktion von Thiosulfat vergleichsweise langsam. Die wesentlichen Reaktionen sind dabei folgende:

2 Na₂S + 2 O₂ + H₂O ⇄ Na₂S₂O₃ + 2 NaOH (1)

Na₂S₂O₃ + 2 NaOH ⇄ 2 Na₂SO₄ + H₂O (2)

Stand der Technik bei der Ablaugeoxidation sind ein Betriebsdruck von 6 bis 40 bar und eine Betriebstemperatur bis über 200 °C, beispi elsweise bis 210 °C. Je höher die Temperatur in Reaktor gewählt wird, desto höher muss der Druck eingestellt werden, da der Dampfdruck stark mit der Temperatur steigt. Die für einen weitgehenden Umsatz erforderliche Verweilzeit im Reaktor sinkt von größenordnungsmäßig 12 Stunden bei 6 bar auf 10 % der genannten Verweilzeit bei 30 bar.

Nach Stand der Technik wird die Ablauge in den Oxidationsreaktor aufgegeben. Ein Sauerstoffträger, in der Regel Luft, wird an beliebiger Stelle, meist vor dem eigentlichen Reaktor, mit der Lauge gemischt. Die Ablauge oder das Ablauge-Sauerstoffträger-Gemisch kann in einem Wärmetauscher vorgewärmt werden.

Gemäß dem Stand der Technik kann die Ablauge also vorgewärmt in den Oxidationsreaktor aufgegeben werden. Dies ist jedoch nicht zwingend erforderlich. Eine weitere Anwärmung (oder die einzige Anwärmung) erfolgt häufig mittels einer Dampfzugabe, die entweder in die zulaufende Ablauge oder direkt in den Reaktor erfolgen kann, sowie allgemein auch durch die Reaktionsenthalpie bzw. Exothermie der Oxidationsreaktionen. Wie erwähnt, kann in entsprechenden Verfahren auch eine Vorwärmung der Ablauge zum Reaktor gegen das Produkt aus dem Reaktor durchgeführt werden.

Da sich der Druck der Gasphase aus dem Dampfdruck und dem Druck der Oxidationsluft addiert und der Druck des zuströmenden Dampfes mindestens so groß wie der Reaktordruck sein muss, kommt für die erwähnte Dampfzugabe vor allem überhitzter Dampf in Frage. Dieser kondensiert partiell und liefert auf diese Weise die zusätzliche Wärme.

Ein für die Ablaugeoxidation verwendeter Oxidationsreaktor ist gemäß dem Stand der Technik derart aufgebaut, so dass sich eine gerichtete Strömung im Reaktor ausbildet und dadurch eine größere Reaktionsgeschwindigkeit und ein höherer Umsatz möglich sind. Hierzu können Einbauten in der Form von gelochten Böden verwendet werden.

Verfahren der zuvor erläuterten Art sind bspw. aus der DE 10 2010 049 445 A1, bei der ein Druck von mehr als 60 bar in einem entsprechenden Reaktionsreaktor eingesetzt wird, sowie aus der die DE 10 2006 030 855 A1 bekannt.

Reaktoren zur Ablaugeoxidation sind wegen der extremen Beanspruchungen aus hochwertigen Materialien wie Nickelbasislegierungen oder Nickel gefertigt. Auch derartige Materialien können jedoch durch hohe Sulfidkonzentrationen bei erhöhten Temperaturen angegriffen werden.

Insbesondere die Behandlung eines aus einem entsprechenden Oxidationsreaktor austretenden bzw. diesem entnommenen Komponentengemischs erweist sich herkömmlicherweise als aufwendig bzw. sind hierzu herkömmlicherweise verwendete Verfahren und Vorrichtungen aus den nachfolgend erläuterten Gründen unbefriedigend. Die vorliegende Erfindung stellt sich daher die Aufgabe, verbesserte Maßnahmen zur Behandlung entsprechender Komponentengemische anzugeben. Eine entsprechende Anlage soll insbesondere mit geringerem Materialaufwand zu vergleichbarer Lebensdauer bzw. bei gleichem Materialaufwand zu erhöhter Lebensdauer entsprechender Anlagenkomponenten führen.

### Offenbarung der Erfindung

Vor diesem Hintergrund schlägt die vorliegende Erfindung ein Verfahren zur Behandlung einer Ablauge einer Laugewäsche unter Verwendung eines Oxidationsreaktors und eine entsprechende Anlage gemäß den jeweiligen Oberbegriffen der unabhängigen Patentansprüche vor. Ausgestaltungen der vorliegenden Erfindung sind jeweils Gegenstand der abhängigen Patentansprüche sowie der nachfolgenden Beschreibung.

### Vorteile der Erfindung

Ein aus einem Oxidationsreaktor der erläuterten Art austretendes Komponentengemisch ist typischerweise dreiphasig und umfasst Gas, wässrige Flüssigkeit (Lauge) sowie Feststoffe in Form organischer Komponenten (Oligomere, Polymere) und anorganischer Komponenten (Salze).

Gemäß dem Stand der Technik wird dieses dreiphasige Komponentengemisch am Austritt des Oxidationsreaktors in einem oder mehreren Wärmetauschern abgekühlt, wobei die noch kondensierbaren Komponenten auskondensiert werden. Bereits in einem entsprechenden Wärmetauscher oder in einem diesem nachgeschalteten Behälter werden die Gas- und die Flüssigkeits- und Feststoffphase voneinander getrennt. Die entsprechend getrennten und abgekühlten Medien werden jeweils separat über Ventile geführt, auf nahezu Umgebungsdruck entspannt und einer weiteren Nachbehandlung zugeführt.

Bei der erläuterten Behandlung des dreiphasigen, aus dem Oxidationsreaktor entnommenen Komponentengemischs ist insbesondere von Nachteil, dass der verwendete Wärmetauscher mit heißen Reaktionsprodukten in Kontakt kommt. Durch die Aggressivität der Medien (Lauge und abrasiv wirkende Feststoffe) und die sich ständig ändernden Benetzungsflächen ist die Lebensdauer eines entsprechenden Wärmetauschers auch bei Verwendung höherwertiger Werkstoffe wie Alloy 600 oder Nickel klein und jedenfalls auf deutlich weniger als 20 Jahre beschränkt. Zu beachten ist dabei, dass ein entsprechender Wärmetauscher bei Einsatz der eingangs beschriebenen Verfahrensvarianten einem hohen Betriebsdruck von 20 bis 40 bar standhalten muss und daher entsprechende Materialstärken erforderlich sind.

Ein weiterer Nachteil besteht darin, dass die separierte Flüssigphase mit darin enthaltenen Partikeln bei Prozessdruck entspannt wird und dabei in der Flüssigkeit gelöste Restgase ausgasen ("flashen"). Hierdurch wird das zur Entspannung verwendete Ventil erneut mit einem Dreiphasengemisch durchströmt, wobei sich durch das Ausgasen ausgesprochen hohe Strömungsgeschwindigkeiten ergeben. Durch die vorhandenen Partikel kommt es dabei zu starken mechanischen bzw. abrasiven Belastungen. Das sich bildende Restgas muss i.d.R. stromab eines entsprechenden Ventils erneut von der Flüssgkeit getrennt und separat hierzu abgeführt werden, beispielsweise zusammen mit der bereits stromauf abgetrennten Gasphase.

Durch den Gehalt der in dem Ventil entspannten Flüssigkeit an Feststoffen und die im Vergleich zu Gas(regel)ventilen kleinen durchströmten Sitze der verwendeten Flüssigkeits(regel)ventile neigen diese Ventile, die typischerweise als Düsenventile ausgebildet sind, zur Blockade und zu Undichtigkeiten durch die angesprochenen Partikel in Form der Polymere und Salze.

Durch den Einsatz der im Rahmen der vorliegenden Erfindung vorgeschlagenen Maßnahmen können diese Nachteile überwunden werden. Insbesondere kommt es zu einer deutlichen Erhöhung der Lebensdauer eines verwendeten Wärmetauschers und eine Nachbehandlung oder Lagerung der Flüssigkeit wird durch einen geringen Gehalt ausgasender Komponenten vereinfacht. Insgesamt wird durch den Einsatz der vorliegenden Erfindung die Verfügbarkeit eines entsprechenden Verfahrens bzw. einer entsprechenden Anlage erhöht.

Insgesamt schlägt die vorliegende Erfindung ein Verfahren zur Behandlung einer Ablauge einer Laugewäsche der zuvor erläuterten Art vor, bei dem die Ablauge mit Sauerstoff oder einem sauerstoffhaltigen Gasgemisch einer Oxidationseinheit zugeführt und in dieser für einen Reaktionszeitraum auf einem ersten Temperaturniveau und einem ersten Druckniveau einer Nassoxidation unterworfen wird. Die Oxidationseinheit kann insbesondere einen oder mehrere der zuvor erläuterten Oxidationsreaktoren sowie diesen zugeordnete Apparate, bspw. Heizeinrichtungen, Dampfsysteme und dergleichen umfassen. Die Nassoxidation in der Oxidationseinheit wird wie zuvor ausführlich erläutert durchgeführt.

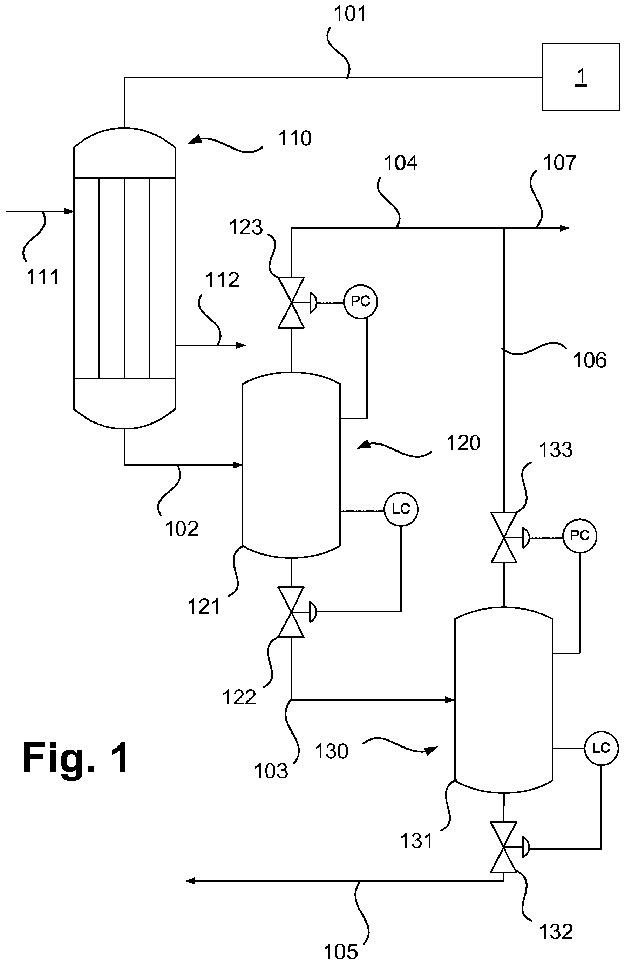

Wie ebenfalls erwähnt wird dabei, und somit auch im Rahmen der vorliegenden Erfindung, der Oxidationseinheit ein dreiphasiges Komponentengemisch, das eine Gasphase, eine Flüssigphase und Feststoffpartikel umfasst, entnommen sowie einer Abkühlung und Phasentrennung unterworfen. Herkömmlicherweise erfolgt dies, wie auch nochmals unter Bezugnahme auf die beigefügte Figur 1 erläutert, in der zuvor erwähnten Art, nämlich derart, dass ein entsprechendes dreiphasiges Komponentengemisch zunächst ohne Entspannung einer Abkühlung und anschließend einer Phasentrennung unterworfen wird. Anschließend erfolgt eine Entspannung der gebildeten Phasen. Hierbei können die zuvor erläuterten Probleme auftreten, die insbesondere in einer starken mechanischen Belastung der bei einer entsprechenden Entspannung verwendeten Entspannungsventile bestehen.

Zur Überwindung der erläuterten Probleme schlägt die vorliegende Erfindung im Gegensatz dazu vor, zumindest einen Teil des dreiphasigen Komponentengemischs zunächst in unveränderter Zusammensetzung einer Entspannung von dem ersten Druckniveau auf ein zweites Druckniveau zu unterwerfen und hierdurch auf ein zweites Temperaturniveau abzukühlen. Zur Vermeidung von Unklarheiten sei betont, dass die "unveränderte Zusammensetzung" sich insbesondere auf die jeweiligen Gehalte der gasförmigen flüssigen und festen Phase stromauf der Entspannung bezieht. Stromab der Entspannung kann es, insbesondere durch Ausgasen, zu einer relativen Vergrößerung der Gasphase und Verkleinerung der Flüssigphase kommen. Die "unveränderte Zusammensetzung" schließt nicht aus, dass stromauf der Entspannung ein Anteil mit ebenfalls unveränderter Zusammensetzung ausgeschleust und nur der verbleibende Rest mit unveränderter Zusammensetzung der Entspannung zugeführt wird.

Im Rahmen der vorliegenden Erfindung hat sich eine derartige Entspannung als besonders vorteilhaft herausgestellt. Im Rahmen der vorliegenden Erfindung wird ausgenutzt, dass sich die Temperatur eines entsprechenden dreiphasigen Komponentengemischs, das ausgasende Komponenten enthält, beispielsweise von einem Temperaturniveau um ca. 200 °C auf ein Temper aturniveau von deutlich unter 170 °C verringert, wenn dieses von dem typischerwei se in einem entsprechenden Reaktor verwendeten Druckniveau von 30 bis 40 bar auf ein Druckniveau von 1 bis 10 bar (jeweils Absolutdrücke) entspannt wird. Ein sich bei einer Entspannung auf 7 bar einstellendes Temperaturniveau liegt beispielsweise bei ca. 150 °C. Dieses vorteilhafte physikalische Verhalten des entspannten Mediums, d.h. des dreiphasigen Komponentengemischs, wird im Rahmen der vorliegenden Erfindung ausgenutzt.

Im Rahmen der vorliegenden Erfindung wird ferner das auf das zweite Druckniveau entspannte und auf das zweite Temperaturniveau abgekühlte dreiphasige Komponentengemisch anschließend zumindest zum Teil einer weiteren Abkühlung auf ein drittes Temperaturniveau und danach einer Phasentrennung unterworfen. Diese weitere Abkühlung kann insbesondere in einem oder mehreren Wärmetauschern erfolgen, die jedoch auf Grund der bereits zuvor erfolgten Abkühlung und Entspannung sowie auf Grund weiterer Vorteile, die im Rahmen der vorliegenden Erfindung erzielt werden, in geringerem Umfang belastet werden und daher kostengünstiger hergestellt werden können bzw. bei Verwendung derselben Materialien wie zuvor eine längere Lebensdauer aufweisen. Bei der sich anschließenden Phasentrennung kommt es auf Grund der bereits vorgenommenen deutlichen Druckreduktion zu einem geringeren Ausgasen, das eine erneute Phasentrennung verzichtbar macht. Das erfindungsgemäß vorgeschlagene Verfahren kommt daher mit einer geringeren Anzahl von Apparaten, Regeleinrichtungen und dergleichen aus, die im Rahmen der vorliegenden Erfindung zudem kostengünstiger hergestellt werden können.

Insbesondere sinkt im Rahmen der vorliegenden Erfindung die Spitzentemperatur an dem zur Abkühlung von dem zweiten Temperaturniveau auf das dritte Temperaturniveau verwendeten Wärmetauscher oder in mehreren entsprechender Wärmetauscher. Hierdurch ist die Verwendung günstiger Werkstoffe (bspw. Austenitische Edelstähl oder vergleichbar) bei reduzierter Lebensdauer möglich. Alternativ dazu kann im Rahmen der vorliegenden Erfindung bei Verwendung entsprechender hochwertigerer Werkstoffe wie Alloy 600 bzw. Nickelbasislegierungen oder Nickel eine deutliche Erhöhung der Wärmetauscherlebensdauer erzielt werden, die auf diese Weise im Bereich einer typischen Anlagenlebensdauer liegen kann. Ein vorzeitiger Austausch entsprechender Wärmetauscher ist daher bei Verwendung des erfindungsgemäß vorgeschlagenen Verfahrens nicht erforderlich.

Durch die Entspannung von dem ersten Druckniveau auf das zweite Druckniveau wird ein entsprechender Wärmetauscher ferner mit geringerem Druck belastet. Entsprechendes gilt auch für die Zuleitungen und weitere Apparate, die das dreiphasige Komponentengemisch führen. Durch den geringeren Betriebsdruck sinkt die erforderliche Wandstärke der beteiligten Rohre und des gesamten Wärmetauschers. Auf diese Weise verringern sich die thermische Masse und die Trägheit. Zudem ergeben sich durch den Einsatz der vorliegenden Erfindung auch in diesem Bereich geringere Materialkosten.

Ein weiterer Vorteil, der durch das erfindungsgemäße Verfahren erzielt wird, ist der, dass der oder die Wärmetauscher, der oder die für die Abkühlung von dem zweiten auf das dritte Temperaturniveau verwendet wird oder werden, am jeweiligen Eintritt mit einem geringeren Flüssiganteil durchströmt werden. Dies ist deshalb der Fall, weil durch die Entspannung von dem ersten Druckniveau auf das zweite Druckniveau ein Teil der in der Flüssigkeit des dreiphasigen Komponentengemischs gelösten Gase ausgasen und damit den Gasanteil bzw. den Anteil der Gasphase erhöhen. Aufgrund des geringeren Flüssiganteiles kann im Rahmen der vorliegenden Erfindung eine Gleichverteilung des mehrphasigen Stroms bzw. des dreiphasigen Komponentengemischs in einem oder mehreren entsprechender Wärmetauscher einfacher bewerkstelligt werden. Auf diese Weise sinkt die Gefahr von lokalen Phasenwechseln und damit die Gefahr erhöhter lokaler Korrosion.

Da, wie erwähnt, der oder die zur Abkühlung von dem zweiten auf das dritte Temperaturniveau verwendeten Wärmetauscher auf den geringerem Druckniveau der nachgeschalteten Systeme betrieben wird oder werden, erfolgt im Rahmen der vorliegenden Erfindung praktisch kein Flash (Ausgasen) bei der Ableitung der flüssigen Phase. Ein entsprechender Flash kann zentral stromab des oder der Wärmetauscher bewirkt werden, wenn der Betriebsdruck des oder der Wärmetauscher nahe dem Betriebsdruck des nachgeschalteten Systems liegt. Ein zweiter Flashbehälter bzw. Phasentrenner, der im Rahmen herkömmlicher Verfahren, wie sie in Figur 1 veranschaulicht sind, zum Einsatz kommt, kann daher entfallen.

Im Rahmen der vorliegenden Erfindung ergibt sich ferner eine im Stand der Technik nicht mögliche, vorteilhafte Prozessregelung. Bisher wurde eine derartige Prozessregelung als nicht möglich angesehen. Nach Stand der Technik werden Gas bzw. Dampf einerseits und Flüssigkeit und Feststoffe andererseits voneinander auf gleichem Druckniveau beispielsweise in einem Separator getrennt und die beiden sich bildenden Ströme werden separat abgeführt. Der Gas- bzw. Dampfstrom dient der Druckregelung des Systems und der Flüssigkeitsstrom wird direkt abgeführt. Durch die im Vergleich zum Gas- bzw. Dampfventil kleine Ventilgröße des Flüssigkeits- und Feststoffventils neigt dieses zur Blockade. In der vorliegenden Erfindung durchströmen hingegen alle Phasen zusammen ein geeignetes Ventil. Durch dessen größere Ausführung werden die Nebeneffekte Blockade und Ablagerung minimiert.

Zu weiteren Vorteilen die durch das erfindungsgemäß vorgeschlagene Verfahren erzielt werden können, wird auf die obigen Erläuterungen ausdrücklich verwiesen.

Vorteilhafterweise wird die Entspannung auf das zweite Druckniveau unter Verwendung einer Ventilanordnung durchgeführt, die ein oder mehrere Entspannungsventile mit jeweils mindestens zwei durchströmten Dichtkannten und einem maximalen Ventilquerschnitt von jeweils mindestens 80% aufweisen. Mit anderen Worten werden im Rahmen der vorliegenden Erfindung vorteilhafterweise als Entspannungsventile Ventile mit mindestens zwei durchströmten Dichtkanten bei gleichzeitiger Möglichkeit der Freigabe des nahezu maximalen freien Strömungsquerschnitts bevorzugt. Insbesondere können in diesem Zusammenhang Kugelhähne oder modifizierte Kugelhähne mit verbesserter Regelcharakteristik zum Einsatz kommen. Die Verwendung wenigstens zweier Dichtkanten reduziert die Erosionsanfälligkeit, erhöht die Lebensdauer der Ventile und sorgt gleichzeitig für eine gute Dichtfähigkeit. Die Möglichkeit der Öffnung von nahezu 100% (diese kann bspw. bei 80, 85, 90 oder 95% Öffnung oder entsprechenden Zwischenwerten liegen) verringert die Anfälligkeit für Blockaden durch Akkumulation und Ablagerung von Partikeln bzw. Feststoffen.

Gemäß einer besonders bevorzugten Ausgestaltung der vorliegenden Erfindung können zwei oder mehr parallel angeordnete Entspannungsventile in einer entsprechenden Ventilanordnung eingesetzt werden, die eine verbesserte Regelbarkeit einer entsprechenden Anlage und/oder einen redundanten Betrieb mit Wartbarkeit ohne Unterbrechung des Betriebs ermöglichen.

Vorteilhafterweise liegt das erste Temperaturniveau bei 150 bis 220 °C, insbesondere bei 185 bis 210 °C. Das zweite Temperaturniveau, al so das Temperaturniveau, das durch die Entspannung von dem ersten Druckniveau auf das zweite Druckniveau erzielt wird, liegt im Rahmen der vorliegenden Erfindung typischerweise bei 120 bis 180 °C, insbesondere bei 150 bis 175 °C sowie gleic hzeitig mindestens 5 °C unterhalb des ersten Temperaturniveaus. Durch eine entsprechende Temperaturreduzierung kann die Belastung von Wärmetauschern und weiteren Apparaten in einer erfindungsgemäß eingesetzten Vorrichtung im Gegensatz zum Stand der Technik wie erläutert deutlich verringert werden.

Das dritte Temperaturniveau liegt im Rahmen der vorliegenden Erfindung vorteilhafterweise bei Umgebungstemperatur bis 100° C, insbesondere unterhalb des Siedepunkts von Wasser. Auf diese Weise kann eine Kondensation sämtlicher kondensierbarer Komponenten bewirkt und damit eine technisch vollständige Phasentrennung sichergestellt werden.

Vorteilhafterweise liegt im Rahmen der Erfindung das erste Druckniveau bei einem Absolutdruck von 10 bis 50 bar, insbesondere von 30 bis 40 bar, und das zweite Druckniveau bei einem Absolutdruck von 1 bis 10 bar, insbesondere von 4 bis 7 bar.

Im Rahmen der vorliegenden Erfindung kann vorgesehen sein, dass das auf das zweite Druckniveau entspannte und auf das zweite Temperaturniveau abgekühlte dreiphasige Komponentengemisch zu einem ersten Anteil einer weiteren Abkühlung auf das dritte Temperaturniveau und danach der Phasentrennung unterworfen wird und zu einem zweiten Anteil ohne die weitere Abkühlung auf das dritte Temperaturniveau der Phasentrennung unterworfen wird. Durch eine derartige Maßnahme kann eine Mischtemperatur eingestellt werden, die sich aus den Temperaturen des ersten (weiter abgekühlten) und des zweiten (nicht weiter abgekühlten) Anteils ergibt.

Eine entsprechende Maßnahme kann insbesondere auch ferner eine Regelung der Temperatur umfassen, indem der erste und der zweite Anteil zueinander nach Maßgabe einer Temperaturregelung eingestellt werden.

Insbesondere kann in diesem Zusammenhang die weitere Abkühlung des ersten Anteils unter Verwendung einer Wärmetauscheinheit mit einem oder mehreren Wärmetauschern durchgeführt werden, an dem oder denen der zweite Anteil zumindest teilweise vorbeigeführt wird. Beispielsweise können im Rahmen der vorliegenden Erfindung auch mehrere Wärmetauscher in Serie eingesetzt werden, die teilweise oder insgesamt nach Maßgabe einer Temperaturregelung mittels einer Bypassleitung umgangen werden können.

Vorteilhafterweise umfasst die Phasentrennung im Rahmen der vorliegenden Erfindung die Verwendung einer Phasentrenneinheit, wobei in der Phasentrennung eine Gasphase und zweiphasiges Komponentengemisch, das eine flüssige Phase und Feststoffpartikel umfasst, gebildet werden. Wie erläutert, erfolgt dabei im Rahmen der vorliegenden Erfindung die Bildung der flüssigen Phase ohne wesentliches weiteres Ausgasen gelöster gasförmiger Komponenten, so dass auf eine nochmalige Phasentrennung verzichtet werden kann. Dies gilt insbesondere dann, wenn die Phasentrenneinheit auf einem Druckniveau von 1 bis 10 bar Absolutdruck, vorzugsweise zwischen 4 und 7 bar Absolutdruck betrieben wird. Das Druckniveau der Phasentrenneinheit kann auch bei 1 bis 2 bar Absolutdruck liegen.

Besondere Vorteile lassen sich in dem erfindungsgemäßen Verfahren erzielen, wenn ein Volumenanteil der Gasphase in dem dreiphasigen Komponentengemisch bei mehr als 25% und beispielsweise bis zu 75% oder 50% liegt. In diesem Fall lässt sich insbesondere im Zusammenhang mit den nachfolgend erläuterten Maßnahmen eine besonders vorteilhafte Druckregelung durchführen.

Besonders vorteilhaft ist es, wenn das dreiphasige Komponentengemisch auf einer ersten geodätischen Höhe der Oxidationseinheit entnommen wird, auf einer zweiten geodätischen Höhe der zumindest teilweisen Entspannung von dem ersten Druckniveau auf das zweite Druckniveau zugeführt wird, und auf einer dritten geodätischen Höhe der Abkühlung auf das zweite Temperaturniveau unterworfen wird, wobei die zweite geodätische Höhe unterhalb der ersten geodätischen Höhe und die dritte geodätische Höhe unterhalb der zweiten geodätischen Höhe liegt. Mit anderen Worten stellt hier der Austritt aus der Oxidationseinheit, also aus einem oder mehreren Oxidationsreaktoren, einen Hochpunkt dar. Insbesondere ist die Oxidationseinheit bzw. sind ein oder mehrere Oxidationsreaktoren dabei mit dem einen oder den mehreren Entspannungsventilen, das oder die zur Entspannung von dem ersten auf das zweite Druckniveau verwendet wird oder werden, mit einer oder mehreren ersten Leitungen verbunden und das oder die Entspannungsventile, das oder die zur Entspannung von dem ersten auf das zweite Druckniveau verwendet wird oder werden, sind mit dem einen oder mehreren Wärmetauschern die zur weiteren Abkühlung auf das dritte Temperaturniveau verwendet wird oder werden, mit einer oder mehreren zweiten Leitungen verbunden. Die eine oder die mehreren ersten und die eine oder die mehrern zweiten Leitungen sind dabei insbesondere stetig fallend verlegt.

Die vorliegende Erfindung erstreckt sich ferner auf eine Anlage zur Behandlung einer Ablauge einer Laugewäsche, bezüglich derer auf den entsprechenden unabhängigen Patentanspruch verwiesen wird. Vorteilhafterweise ist eine entsprechende Anlage zur Durchführung eines Verfahrens eingerichtet, wie es zuvor unterschiedlichen Ausgestaltungen erläutert wurde, und weist hierzu entsprechende Mittel auf. Zu Merkmalen und Vorteilen einer erfindungsgemäß bereitgestellten Anlage sei daher ausdrücklich auf die obigen Erläuterungen des erfindungsgemäßen Verfahrens sowie seiner Ausgestaltungen verwiesen.

Die Erfindung wird nachfolgend unter Bezugnahme auf die beigefügten Zeichnungen gegenüber dem Stand der Technik erläutert.

Kurze Beschreibung der Zeichnungen
Figur 1 veranschaulicht ein Verfahren zur Behandlung einer Ablauge gemäß einer nicht erfindungsgemäßen Ausgestaltung in vereinfachter Darstellung.
Figur 2 veranschaulicht ein Verfahren zur Behandlung einer Ablauge gemäß einer Ausführungsform der Erfindung in vereinfachter Darstellung.

### Ausführliche Beschreibung der Zeichnungen

In Figur 1 ist ein Verfahren gemäß einer nicht erfindungsgemäßen Ausgestaltung zur Behandlung einer Ablauge in Form eines stark vereinfachten Prozessflussdiagrams veranschaulicht.

In dem in Figur 1 veranschaulichten Verfahren wird mittels einer Oxidationseinheit 1, die hier sehr stark vereinfacht veranschaulicht ist und eine oder mehrere Oxidationsreaktoren umfassen kann, eine Nassoxidation einer Ablauge vorgenommen. Hierzu wird die Oxidationseinheit Ablauge zusammen mit Dampf und Sauerstoff oder einem sauerstoffhaltigen Gasgemisch zugeführt und in der Oxidationseinheit für einen Reaktionszeitraum auf einem ersten Temperaturniveau und einem ersten Druckniveau einer Nassoxidation unterworfen. Zu den hierbei verwendeten Drücken und Temperaturen sei auf die obigen Erläuterungen ausdrücklich verwiesen.

In dem in Figur 1 veranschaulichten Verfahren wird der Oxidationseinheit 1 ein dreiphasiges Komponentengemisch, das hier im Form eines Stoffstroms 101 veranschaulicht ist, entnommen und in einer Wärmetauscheinheit 110 auf dem Druck- und Temperaturniveau, auf dem es der Oxidationseinheit 1 entnommen wurde, abgekühlt. Die Wärmetauscheinheit 110 wird dabei unter Verwendung eines Temperiermediums betrieben, das hier im Form eines Vorlaufstroms 111 und eines Nachlaufstroms 112 veranschaulicht ist.

Ein auf diese Weise abgekühltes dreiphasiges Komponentengemisch wird in dem in Figur 1 veranschaulichten Verfahren in Form eines Stoffstroms 102 einer ersten Phasentrenneinheit 120 zugeführt, die einen Behälter 121 umfasst. In dem Behälter 121 scheidet sich sumpfseitig eine flüssige Phase mit Partikeln, also ein Zweiphasengemisch, ab. Dieses kann über ein Ventil 122 nach Maßgabe einer Frühstandskontrolle LC in Form eines Stoffstroms 103 abgezogen und in eine zweite Phasentrenneinheit 130 überführt werden. Diese ist hier erforderlich, weil bei der Entspannung des Zweikomponentengemischs aus der ersten Phasentrenneinheit 120 gelöste Gase ausgasen (flashen). In der zweiten Phasentrenneinheit 130, die erneut einen Behälter 131 umfasst, scheidet sich daher erneut ein zweiphasiges Komponentengemisch im Sumpf ab.

Vom Kopf der ersten Phasentrenneinheit 120 wird über ein Ventil 123 nach Maßgabe einer Druckregelung PC eine Gasphase in Form eines Stroms 104 abgezogen. Diese kann mit einer entsprechend nach Maßgabe einer Druckregelung PC über ein Ventil 133 aus der Phasentrenneinheit 130 abgezogenen Gasphase in Form eines Stoffstroms 106 zu einem Sammelstrom 107 vereinigt werden.

Durch das in Figur 1 veranschaulichte Verfahren gemäß dem Stand der Technik kann letztlich aus der zweiten Phasentrenneinheit 130 nach Maßgabe einer Füllstandsregelung LC über ein Ventil 132 ein Flüssigstrom mit Partikeln, also ein Zweiphasenstrom 105, bereitgestellt werden, der bspw. einer Lagerung oder weiteren Aufbereitung zugeführt werden kann.

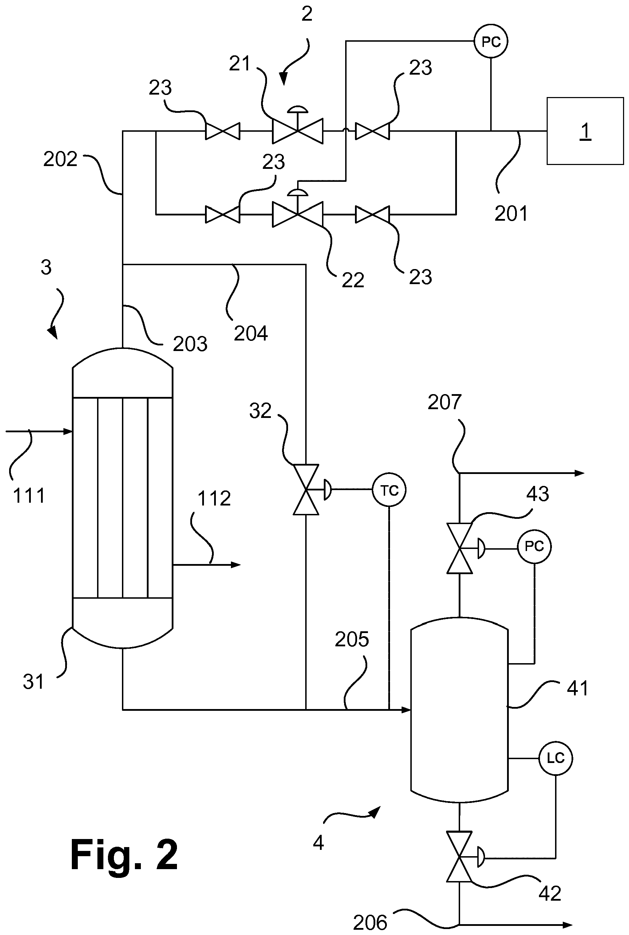

In Figur 2 ist ein Verfahren gemäß einer Ausführungsform der vorliegenden Erfindung in Form eines stark vereinfachten Prozessflussdiagramms veranschaulicht. Auch hier kommt eine Oxidationseinheit 1 zum Einsatz, bezüglich derer auf die Erläuterungen zur Figur 1 und die einleitend getroffenen Erläuterungen verwiesen werden kann.

Aus der Oxidationseinheit 1 wird ein dreiphasiges Komponentengemisch 201, das eine Gasphase, eine Flüssigphase und Feststoffpartikel umfasst, auf dem Druckniveau, auf dem die Oxidationseinheit 1 betrieben wird, sowie auf einem entsprechenden Temperaturniveau, abgezogen. Im Gegensatz zu dem in Figur 1 veranschaulichten Verfahren wird dieses jedoch nun zunächst mittels einer Entspannungseinheit 2 entspannt. Die Entspannung erfolgt dabei von einem ersten Druckniveau auf ein zweites Druckniveau. Zu den Druckniveaus wird jeweils auf die obigen Erläuterungen ausdrücklich verwiesen. Durch die Entspannung ergibt sich auf Grund der vorliegenden physikalischen Gesetzmäßigkeiten eine Abkühlung des dreiphasigen Komponentengemischs 201 und ein teilweises Ausgasen gelöster gasförmiger Komponenten. Ein entsprechend gebildetes, ebenfalls dreiphasiges Komponentengemisch ist mit 202 bezeichnet.

Die Entspannungseinheit 2 kann dabei, wie in der in Figur 2 veranschaulichten Ausgestaltung der vorliegenden Erfindung der Fall, zwei parallel angeordnete Entspannungsventile, 21, 22 umfassen, die in der zuvor erläuterten Art ausgebildet sein können. Dabei kann zumindest eines dieser Entspannungsventile 21, 22 auf Grundlage einer Druckregelung PC betrieben werden. Anstelle einer parallelen Bereitstellung mehrerer Entspannungsventile 21, 22 können jedoch Ventile in Serie oder ein Ventil einzeln angeordnet werden. Den Entspannungsventilen 21, 22 sind im dargestelltem Beispiel insbesondere Schaltventile 23 bzw. Sperrventile vor- bzw. nachgeschaltet.

In der in Figur 2 veranschaulichten Ausführungsform der vorliegenden Erfindung wird das dreiphasige Komponentengemisch 202, nach dem es in der Entspannungseinrichtung 2 von dem ersten Druckniveau auf das zweite Druckniveau entspannt wurde, in zwei Teilströme 203 und 204 aufgeteilt. Dies ist jedoch nicht zwingend erforderlich. Es kann auch lediglich eine Behandlung des gesamten dreiphasigen Komponentengemischs 202 nach Art des Stoffstroms 203 vorgesehen werden. Der Stoffstrom 204 wird in einem solchen Fall nicht gebildet.

Im dargestellten Beispiel wird der Teilstrom 203 einem Wärmetauscher 31 in der Wärmetauscheinheit 3 zugeführt, der, wie bereits zuvor bezüglich des Wärmetauschers gemäß Figur 1 erläutert, mit einem Kältemittel durchströmt werden kann. Dies ist hier in Form eines Vorlaufs 111 und eines Nachlaufs 112, wie in Figur 1 veranschaulicht, dargestellt. Aufgrund des hier abweichenden Kältebedarfs kann jedoch insbesondere ein anderes Kältemittel als in dem in Figur 1 veranschaulichten Verfahren zum Einsatz kommen. Das dreiphasige Komponentengemisch 203 wird in dem Wärmetauscher 31 von dem zweiten Temperaturniveau auf ein drittes Temperaturniveau weiter abgekühlt.

Parallel dazu wird in der in Figur 2 veranschaulichten Ausführungsform optional der Teilstrom 204 über ein Ventil 32 nach Maßgabe einer Temperatursteuerung TC an dem Wärmetauscher 31 vorbeigeführt und mit dem dort abgekühlten Teilstrom 203 zu einem Sammelstrom 205 vereinigt. Auf diese Weise kann eine Temperatur des Sammelstroms 205 eingestellt werden.

Der Sammelstrom 205 wird im dargestellten Beispiel in eine Phasentrenneinheit 4 eingespeist, die einen Behälter 41 aufweist. Dieser ist mit Ventilen 42 und 43 versehen, die über eine Frühstandsregelung LC bzw. eine Druckregelung TC angesteuert werden können. Mittels der Phasentrenneinheit 4 bzw. des Behälters 41 können auf diese Weise ein Zweiphasengemisch 206, das eine Flüssigphase mit Partikeln darstellt, und eine Gasphase 207 gebildet werden.

Im Gegensatz zu der in Figur 1 veranschaulichten Ausführungsform gemäß dem Stand der Technik braucht die Flüssigphase 206 dabei gemäß dieser Ausgestaltung der Erfindung keiner weiteren Phasentrennung mehr unterworfen werden, da sie einen geringeren Anteil ausgegaster Komponenten aufweist.

## Patentansprüche

1. Verfahren zur Behandlung einer Ablauge einer Laugewäsche, bei dem die Ablauge mit Sauerstoff oder einem sauerstoffhaltige Gasgemisch und Dampf einer Oxidationseinheit (1) zugeführt und in dieser für einen Reaktionszeitraum auf einem ersten Temperaturniveau und einem ersten Druckniveau einer Nassoxidation unterworfen wird, wobei der Oxidationseinheit (1) ein dreiphasiges Komponentengemisch, das eine Gasphase, eine Flüssigphase und Feststoffpartikel umfasst, entnommen und einer Abkühlung und Phasentrennung unterworfen wird, **dadurch gekennzeichnet, dass** zumindest ein Teil des dreiphasigen Komponentengemischs in unveränderter Zusammensetzung zunächst einer Entspannung von dem ersten Druckniveau auf ein zweites Druckniveau zugeführt und hierdurch auf ein zweites Temperaturniveau abgekühlt wird, und dass das auf das zweite Druckniveau entspannte und auf das zweite Temperaturniveau abgekühlte dreiphasige Komponentengemisch anschließend zumindest zum Teil einer weiteren Abkühlung auf ein drittes Temperaturniveau und danach einer Phasentrennung unterworfen wird.

2. Verfahren nach Anspruch 1, bei dem die Entspannung auf das zweite Druckniveau unter Verwendung einer Ventilanordnung (2) durchgeführt wird, die ein oder mehrerere Entspannungsventile (21, 22) mit jeweils mindestens zwei durchströmten Dichtkanten und einem maximalen Ventilquerschnitt von jeweils mindestens 80% aufweisen.

3. Verfahren nach Anspruch 2, bei dem das oder die Entspannungsventile (21, 22) als ein oder mehrere Kugelventile ausgebildet sind.

4. Verfahren nach Anspruch 2 oder 3, bei dem die Ventilanordnung (2) zwei oder mehrer parallel angeordnete Entspannungsventile (21, 22) umfasst.

5. Verfahren nach einem der vorstehenden Ansprüche, bei dem das erste Temperaturniveau bei 180 bis 220 °C und das zweite Temperaturniveau bei 120 bis 180 °C sowie mindestens 5 °C unterhalb des erst en Temperaturniveaus liegt.

6. Verfahren nach einem der vorstehenden Ansprüche, bei dem das dritte Temperaturniveau bei Umgebungstemperatur bis 100 °C liegt.

7. Verfahren nach einem der vorstehenden Ansprüche, bei dem das erste Druckniveau bei einem Absolutdruck von 20 bis 50 bar und das zweite Druckniveau bei einem Absolutdruck von 1 bis 10 bar liegt.

8. Verfahren nach einem der vorstehenden Ansprüche, bei dem das auf das zweite Druckniveau entspannte und auf das zweite Temperaturniveau abgekühlte dreiphasige Komponentengemisch zu einem ersten Anteil der weiteren Abkühlung auf das dritte Temperaturniveau und danach der Phasentrennung unterworfen wird und zu einem zweiten Anteil ohne die weitere Abkühlung auf das dritte Temperaturniveau der Phasentrennung unterworfen wird.

9. Verfahren nach Anspruch 8, bei dem der erste und der zweite Anteil zueinander nach Maßgabe einer Temperaturregelung eingestellt werden.

10. Verfahren nach Anspruch 8 oder 9, bei dem die weitere Abkühlung des ersten Anteils unter Verwendung einer Wärmetauscheinheit (3) mit einem oder mehreren Wärmetauschern (31) durchgeführt wird, an dem oder denen der zweite Anteil zumindest teilweise vorbeigeführt wird.

11. Verfahren nach einem der vorstehenden Ansprüche, bei dem die Phasentrennung unter Verwendung einer Phasentrenneinheit (4) durchgeführt wird und bei dem in der Phasentrennung eine Gasphase und ein zweiphasiges Komponentengemisch, das eine flüssige Phase und Feststoffpartikel umfasst, gebildet werden.

12. Verfahren nach Anspruch 11, bei dem die Phasentrenneinheit (4) auf einem Druckniveau von 1 bis 10 bar Absolutdruck betrieben wird.

13. Verfahren nach einem der vorstehenden Ansprüche, bei dem ein Volumenanteil der Gasphase in dem dreiphasigen Komponentengemisch bei mehr als 25% liegt.

14. Verfahren nach einem der vorstehenden Ansprüche, bei dem das dreiphasige Komponentengemisch auf einer ersten geodätischen Höhe der Oxidationseinheit (1) entnommen wird, auf einer zweiten geodätischen Höhe der zumindest teilweisen Entspannung von dem ersten Druckniveau auf das zweite Druckniveau zugeführt wird, und auf einer dritten geodätischen Höhe der Abkühlung auf das zweite Temperaturniveau unterworfen wird, wobei die zweite geodätische Höhe unterhalb der ersten geodätischen Höhe und die dritte geodätische Höhe unterhalb der zweiten geodätischen Höhe liegt.

15. Anlage zur Behandlung einer Ablauge einer Laugewäsche, mit Mitteln, die dafür eingerichtet sind, die Ablauge mit Sauerstoff oder einem sauerstoffhaltigen Gasgemisch und Dampf einer Oxidationseinheit (1) zuzuführen und in dieser für einen Reaktionszeitraum auf einem ersten Temperaturniveau und einem ersten Druckniveau einer Nassoxidation zu unterwerfen, und Mitteln, die dafür eingerichtet sind, der Oxidationseinheit (1) ein dreiphasiges Komponentengemisch, das eine Gasphase, eine Flüssigphase und Feststoffpartikel umfasst, zu entnehmen und einer Abkühlung und Phasentrennung zu unterwerfen, **dadurch gekennzeichnet, dass** Mittel bereitgestellt sind, die dafür eingerichtet sind, zumindest einen Teil des dreiphasigen Komponentengemischs in unveränderter Zusammensetzung zunächst von dem ersten Druckniveau auf ein zweites Druckniveau zu entspannen und hierdurch auf ein zweites Temperaturniveau abzukühlen, und dass Mittel bereitgestellt sind, die dafür eingerichtet sind, das auf das zweite Druckniveau entspannte und auf das zweite Temperaturniveau abgekühlte dreiphasige Komponentengemisch anschließend zumindest zum Teil einer weiteren Abkühlung auf ein drittes Temperaturniveau und danach einer Phasentrennung zu unterwerfen.
